(19) Europäisches Patentamt
European Patent Office
Office européen des brevets

(11) Publication number: **0 335 101 B1**

(12) **EUROPEAN PATENT SPECIFICATION**

(45) Date of publication of patent specification: **21.06.95**

(51) Int. Cl.[6]: **C08L 67/00**, C08L 69/00, C08L 71/12

(21) Application number: **89102931.6**

(22) Date of filing: **20.02.89**

The file contains technical information submitted after the application was filed and not included in this specification

(54) **Solvent-resistant, compatible blends of polyphenylene ethers and a mixture of thermoplastic polyesters.**

(30) Priority: **28.03.88 US 173789**

(43) Date of publication of application:
**04.10.89 Bulletin 89/40**

(45) Publication of the grant of the patent:
**21.06.95 Bulletin 95/25**

(84) Designated Contracting States:
**DE FR GB IT NL**

(56) References cited:
**EP-A- 0 037 547**
**EP-A- 0 208 940**
**EP-A- 0 217 167**
**WO-A-87/00850**

**JOURNAL OF APPLIED POLYMER SCIENCE, vol. 30, no. 10, 1985, pages 4081-4098,John Wiley & Sons, Inc., New York, US; L.M. ROBESON: "Phasebehavior of polyarylate blends"**

(73) Proprietor: **GENERAL ELECTRIC COMPANY**
**1 River Road**
**Schenectady**
**New York 12305 (US)**

(72) Inventor: **Brown, Sterling Bruce**
**3 Rosa Road**
**Schenectady**
**New York 12308 (US)**
Inventor: **Lowry, Richard, Charles**
**115 Yorktown Drive**
**Clifton Park**
**New York 12065 (US)**

(74) Representative: **Pratt, Richard Wilson et al**
**London Patent Operation**
**G.E. Technical Services Co. Inc.**
**Essex House**
**12/13 Essex Street**
**London WC2R 3AA (GB)**

**EP 0 335 101 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to novel resinous compositions with high impact strength, resistance to solvents and thermal distortion, tensile strength and thermal stability. More particularly, it relates to improved compositions comprising polyphenylene ethers and thermoplastic polyesters.

The polyphenylene ethers are a widely used class of thermoplastic engineering resins characterized by excellent hydrolytic stability, dimensional stability, toughness, heat resistance and dielectric properties. They are also resistant to high temperature conditions under many circumstances. Because of the brittleness of many compositions containing polyphenylene ethers, they are frequently blended with impact modifiers such as elastomers to form molding compositions.

There has been considerable interest in recent years in compositions comprising polyphenylene ethers in combination with other resins having desirable properties. Illustrative of such resins are the thermoplastic polyesters including polyarylates and poly(alkylene dicarboxylates), especially the poly(alkylene terephthalates). However, such blends frequently undergo phase separation and delamination. They typically contain large, incompletely dispersed polyphenylene ether particles and no phase interaction between the two resin phases. Molded parts made from such blends are typically characterized by extremely low impact strength.

WO87/00850 discloses impact- and solvent-resistant resin blends prepared from a polyphenylene ether, or blend thereof with a polystyrene, a linear polyester such as a poly(alkylene dicarboxylate), at least one elastomeric polyphenylene ether-compatible impact modifier and at least one polymer containing a substantial proportion of aromatic polycarbonate units as a compatibilizing agent. There may also be present a minor amount of at least one epoxide and/or masked isocyanate such as triglycidyl isocyanurate or a glycidyl methacrylate polymer. The polyphenylene ether is preferably inactivated by reaction with at least one non-volatile carboxylic acid or anhydride and/or by extrusion with vacuum venting.

EP-A-0208940 discloses compositions comprised of, in physical admixture, at least one copolyestercarbonate resin, at least one polyarylate resin, and at least one resin selected from polystyrene resins, polyphenylene ether resins, and mixtures thereof. These blends exhibit good compatibility of the components and can be molded into a variety of articles.

The present invention provides polymer blends having excellent impact and/or tensile properties even after being subjected to prolonged heating cycles during injection molding and the like. It also provides highly compatible polymer blends containing polyphenylene ethers, polyarylates and poly(alkylene dicarboxylates), and resinous molding compositions prepared therefrom.

The invention is based on the discovery of a new genus of compatible blends containing polyphenylene ethers, polyarylates and poly(alkylene dicarboxylates), and a method for their preparation. According to the invention, there is also incorporated in the resinous composition an aromatic polycarbonate as a compatibilizing agent.

In one of its aspects, therefore, the invention is directed to resinous compositions comprising the following resinous components and any reaction products thereof, all percentage proportions being by weight of total resinous components:

(A) 25-60% of at least one polyphenylene ether containing at most 800 ppm. of unneutralized amino nitrogen;

(B) 30-60% of a polyester mixture comprising (B-1) 40-95%, based on total polyester, of a polymer consisting essentially of structural units of the formula

$$(I) \qquad -O-R^1-O-\overset{O}{\overset{\|}{C}}-A^1-\overset{O}{\overset{\|}{C}}- \quad ,$$

and (B-2) 5-60% of a polymer consisting essentially of structural units of the formula

$$(II) \qquad -O-A^2-Y-A^3-O-\overset{O}{\overset{\|}{C}}-A^1-\overset{O}{\overset{\|}{C}}- \quad ,$$

wherein:

$R^1$ is a saturated $C_{2-10}$ divalent aliphatic or alicyclic hydrocarbon radical;

each of $A^1$, $A^2$ and $A^3$ is independently a monocyclic divalent aromatic radical; and

Y is a bridging radical in which one or two atoms separate $A^2$ from $A^3$; and

(C) 5-20% of at least one aromatic polycarbonate having a weight average molecular weight of at least 45,000 as determined by gel permeation chromatography relative to polystyrene.

It is not certain whether any or all of the components in these compositions interact chemically upon blending. Therefore, the invention includes compositions comprising said components and any reaction products thereof, as well as other optional components described hereinafter.

The polyphenylene ethers (also known as polyphenylene oxides) used as component A in the present invention comprise a plurality of structural units having the formula

(III) 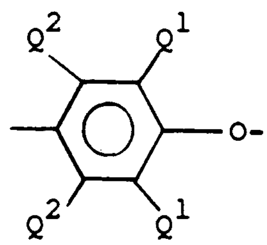

In each of said units independently, each $Q^1$ is independently halogen, primary or secondary lower alkyl (i.e., alkyl containing up to 7 carbon atoms), phenyl, haloalkyl, aminoalkyl, hydrocarbonoxy, or halohydrocarbonoxy wherein at least two carbon atoms separate the halogen and oxygen atoms; and each $Q^2$ is independently hydrogen, halogen, primary or secondary lower alkyl, phenyl, haloalkyl, hydrocarbonoxy or halohydrocarbonoxy as defined for $Q^1$. Examples of suitable primary lower alkyl groups are methyl, ethyl, n-propyl, n-butyl, isobutyl, n-amyl, isoamyl, 2-methylbutyl, n-hexyl, 2,3-dimethylbutyl, 2-, 3- or 4-methylpentyl and the corresponding heptyl groups. Examples of secondary lower alkyl groups are isopropyl, sec-butyl and 3-pentyl. Preferably, any alkyl radicals are straight chain rather than branched. Most often, each $Q^1$ is alkyl or phenyl, especially $C_{1-4}$ alkyl, and each $Q^2$ is hydrogen. Suitable polyphenylene ethers are disclosed in a large number of patents.

Both homopolymer and copolymer polyphenylene ethers are included. Suitable homopolymers are those containing, for example, 2,6-dimethyl-1,4-phenylene ether units. Suitable copolymers include random copolymers containing such units in combination with (for example) 2,3,6-trimethyl-1,4-phenylene ether units. Many suitable random copolymers, as well as homopolymers, are disclosed in the patent literature.

Also included are polyphenylene ethers containing moieties which modify properties such as molecular weight, melt viscosity and/or impact strength. Such polymers are described in the patent literature and may be prepared by grafting onto the polyphenylene ether in known manner such vinyl monomers as acrylonitrile and vinylaromatic compounds (e.g., styrene), or such polymers as polystyrenes and elastomers. The product typically contains both grafted and ungrafted moieties. Other suitable polymers are the coupled polyphenylene ethers in which the coupling agent is reacted in known manner with the hydroxy groups of two polyphenylene ether chains to produce a higher molecular weight polymer containing the reaction product of the hydroxy groups and the coupling agent. Illustrative coupling agents are low molecular weight polycarbonates, quinones, heterocycles and formals.

The polyphenylene ether generally has a number average molecular weight within the range of 3,000-40,000 and a weight average molecular weight within the range of 20,000-80,000, as determined by gel permeation chromatography. Its intrinsic viscosity is most often in the range of 0.15-0.6 and preferably at least 0.25 dl./g., as measured in chloroform at 25 ° C.

The polyphenylene ethers are typically prepared by the oxidative coupling of at least one corresponding monohydroxyaromatic compound. Particularly useful and readily available monohydroxyaromatic compounds are 2,6-xylenol (wherein each $Q^1$ is methyl and each $Q^2$ is hydrogen), whereupon the polymer may be characterized as a poly(2,6-dimethyl-1,4-phenylene ether), and 2,3,6-trimethylphenol (wherein each $Q^1$ and one $Q^2$ is methyl and the other $Q^2$ is hydrogen).

A variety of catalyst systems are known for the preparation of polyphenylene ethers by oxidative coupling. There is no particular limitation as to catalyst choice and any of the known catalysts can be used. For the most part, they contain at least one heavy metal compound such as a copper, manganese or cobalt

compound, usually in combination with various other materials.

A first class of preferred catalyst systems consists of those containing a copper compound. Such catalysts are disclosed, for example, in U.S. Patents 3,306,874, 3,306,875, 3,914,266 and 4,028,341. They are usually combinations of cuprous or cupric ions, halide (i.e., chloride, bromide or iodide) ions and at least one amine.

Catalyst systems containing manganese compounds constitute a second preferred class. They are generally alkaline systems in which divalent manganese is combined with such anions as halide, alkoxide or phenoxide. Most often, the manganese is present as a complex with one or more complexing and/or chelating agents such as dialkylamines, alkanolamines, alkylenediamines, o-hydroxyaromatic aldehydes, o-hydroxyazo compounds, ω-hydroxyoximes (monomeric and polymeric), o-hydroxyaryl oximes and β-diketones. Also useful are known cobalt-containing catalyst systems. Suitable manganese and cobalt-containing catalyst systems for polyphenylene ether preparation are known in the art by reason of disclosure in numerous patents and publications.

The polyphenylene ethers which may be used in the invention include those which comprise molecules having at least one of the end groups of the formulas

(IV) 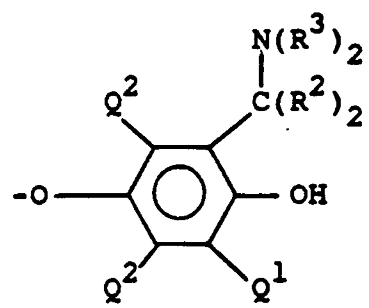 and

(V) 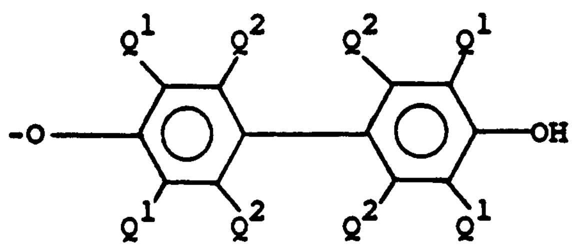 ,

wherein $Q^1$ and $Q^2$ are as previously defined; each $R^2$ is independently hydrogen or alkyl, with the proviso that the total number of carbon atoms in both $R^2$ radicals is 6 or less; and each $R^3$ is independently hydrogen or a $C_{1-6}$ primary alkyl radical. Preferably, each $R^2$ is hydrogen and each $R^3$ is alkyl, especially methyl or n-butyl.

Polymers containing the end groups of formula IV (hereinafter "aminoalkyl end groups") may be obtained by incorporating an appropriate primary or secondary monoamine as one of the constituents of the oxidative coupling reaction mixture, especially when a copper- or manganese-containing catalyst is used. Such amines, especially the dialkylamines and preferably di-n-butylamine and dimethylamine, frequently become chemically bound to the polyphenylene ether, most often by replacing one of the α-hydrogen atoms on one or more $Q^1$ radicals. The principal site of reaction is the $Q^1$ radical adjacent to the hydroxy group on the terminal unit of the polymer chain. During further processing and/or blending, the aminoalkyl end groups may undergo various reactions, probably involving a quinone methide-type intermediate of the formula

(VI) 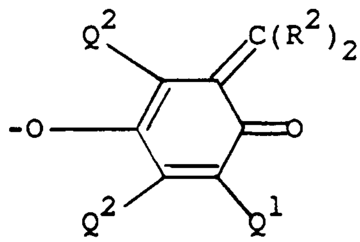 ,

with numerous beneficial effects often including an increase in impact strength and compatibilization with other blend components. Reference is made to U.S. Patents 4,054,553, 4,092,294, 4,477,649, 4,477,651 and 4,517,341.

Polymers with 4-hydroxybiphenyl end groups of formula V are typically obtained from reaction mixtures in which a by-product diphenoquinone of the formula

(VII) 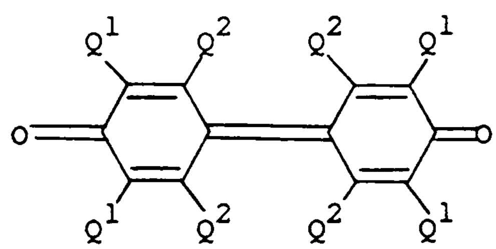 .

is present, especially in a copper-halide-secondary or tertiary amine system. In this regard, the disclosure of U.S. Patent 4,477,649 is again pertinent as are those of U.S. 4,234,706 and 4,482,697, In mixtures of this type, the diphenoquinone is ultimately incorporated into the polymer in substantial proportions, largely as an end group.

In many polyphenylene ethers obtained under the above-described conditions, a substantial proportion of the polymer molecules, typically constituting as much as about 90% by weight of the polymer, contain end groups having one or frequently both of formulas IV and V. In particular, polyphenylene ethers originally containing at least about 60% by weight of molecules having aminoalkyl end groups of formula V are contemplated for use in the present invention.

The use of polyphenylene ethers containing substantial amounts of unneutralized amino nitrogen generally affords compositions with undesirably low impact strengths. The possible reasons for this are explained hereinafter. The amino compounds include, in addition to the aforementioned aminoalkyl end groups, traces of amine (particularly secondary amine) in the catalyst used to form the polyphenylene ether.

According to the present invention, therefore, a substantial proportion of any amino compounds in the polyphenylene ether is removed or inactivated. Polymers so treated are sometimes referred to hereinafter as "inactivated polyphenylene ethers". They contain unneutralized amino nitrogen, if any, in amounts no greater than 800 ppm. and more preferably in the range of about 100-800 ppm. Various means for inactivation have been developed and any one or more thereof may be used.

One such method is to precompound the polyphenylene ether with at least one non-volatile compound containing a carboxylic acid, acid anhydride or ester group, which is capable of neutralizing the amine compounds. This method is of particular interest in the preparation of compositions of this invention having high resistance to heat distortion. Illustrative acids, anhydrides and esters are citric acid, malic acid, agaricic acid, succinic acid, succinic anhydride, maleic acid, maleic anhydride, diethyl maleate, citraconic acid, citraconic anhydride, itaconic acid, itaconic anhydride, fumaric acid, methyl fumarate and pyromellitic dianhydride. Because of their relatively high reactivity with amino compounds, the free carboxylic acids and their anhydrides, especially fumaric acid and pyromellitic dianhydride, are generally most useful.

Reaction of the polyphenylene ether with the acid or anhydride may be achieved by heating at a temperature within the range of 230-390 °C, in solution or preferably in the melt. In general, 0.3-2.0 and preferably 0.5-1.5 parts (by weight) of acid or anhydride is employed per 100 parts of polyphenylene ether. Said reaction may conveniently be carried out in an extruder or similar equipment.

Another method of inactivation is by extrusion of the polyphenylene ether under the above-described conditions with vacuum venting. This may be achieved either in a preliminary extrusion step (which is sometimes preferred) or during extrusion of the composition of this invention, by connecting the vent of the extruder to a vacuum pump capable of creating a pressure of 26.67 kPa (200 torr) or less.

It is believed that these inactivation methods aid in the removal by evaporation or the neutralization of any traces of free amines (predominantly secondary amines) in the polymer, including amines generated by conversion of aminoalkyl end groups to quinone methides of the type represented by formula VI. Polyphenylene ethers having a free amine nitrogen content below 600 ppm. have been found particularly useful in this invention. However, the invention is not dependent on any theory of inactivation.

Component B is a mixture of at least two thermoplastic polyesters, one being a poly(alkylene dicarboxylate) and the other being a polyarylate. Component B-1, the poly(alkylene dicarboxylate), consists essentially of structural units of formula I. The $R^1$ value therein is a $C_{2-10}$ saturated divalent aliphatic or alicyclic hydrocarbon radical, usually ethylene or tetramethylene, and $A^1$ is a divalent monocyclic aromatic radical and preferably m- or p-phenylene.

These polyesters generally have number average molecular weights in the range of 20,000-70,000, as determined by intrinsic viscosity (IV) at 30 °C in a mixture of 60% phenol and 40% 1,1,2,2-tetrachloroethane by weight. When resistance to heat distortion is an important factor the polyester molecular weight should be relatively high, typically above 40,000.

Such polyesters are ordinarily prepared by the reaction of at least one diol such as ethylene glycol, 1,4-butanediol or 1,4-cyclohexanedimethanol with at least one aromatic dicarboxylic acid such as isophthalic or terephthalic acid, or lower alkyl ester thereof. Poly(ethylene terephthalate) and poly(butylene terephthalate), and especially the latter, are preferred; they are known in the art as illustrated by the following patents:

| | |
|---|---|
| 2,465,319 | 3,047,539 |
| 2,720,502 | 3,671,487 |
| 2,727,881 | 3,953,394 |
| 2,822,348 | 4,128,526. |

Component B-2 is a polyarylate consisting essentially of units of formula II, wherein each of $A^2$ and $A^3$ is an aromatic radical similar to $A^1$. Most often, $A^2$ and $A^3$ are both p-phenylene.

The bridging radical, Y, is one in which one or two atoms, preferably one, separate $A^1$ from $A^2$. It is most often a hydrocarbon radical and particularly a saturated $C_{1-12}$ aliphatic or alicyclic radical such as methylene, cyclohexylmethylene, 2-[2.2.1]bicycloheptylmethylene, ethylene, ethylidene, 2,2-propylidene, 1,1-(2,2-dimethylpropylidene), cyclohexylidene, cyclopentadecylidene, cyclododecylidene or 2,2-adamantylidene, especially an alkylidene radical. Aryl-substituted radicals are included, as are unsaturated radicals and radicals containing atoms other than carbon and hydrogen; e.g., oxy groups. Substituents such as those previously enumerated may be present on the aliphatic, alicyclic and aromatic portions of the Y group.

The polyarylate may be prepared by conventional methods, typically by the reaction of a bisphenol with a dicarboxylic acid or functional derivative thereof. The following bisphenols are illustrative:

Bis(4-hydroxyphenyl)methane
Bis(4-hydroxyphenyl)diphenylmethane
Bis(4-hydroxyphenyl)-1-naphthylmethane
1,1-Bis(4-hydroxyphenyl )ethane
1,2-Bis(4-hydroxyphenyl)ethane
1,1-Bis(4-hydroxyphenyl)-1-phenylethane
2,2-Bis(4-hydroxyphenyl)propane ("bisphenol A")
2-(4-Hydroxyphenyl)-2-(3-hydroxyphenyl)propane
2,2-Bis(4-hydroxyphenyl)butane
1,1-Bis(4-hydroxyphenyl)isobutane
1,1-Bis(4-hydroxyphenyl)cyclohexane
1,1-Bis(4-hydroxyphenyl)cyclododecane
Trans-2,3-bis(4-hydroxyphenyl)-2-butene
2,2-Bis(4-hydroxyphenyl)adamantane
Bis(4-hydroxyphenyl)acetonitrile
2,2-Bis(3-methyl-4-hydroxyphenyl)propane
2,2-Bis(3-ethyl-4-hydroxyphenyl)propane
2,2-Bis(3-n-propyl-4-hydroxyphenyl)propane

2,2-Bis(3-isopropyl-4-hydroxyphenyl)propane
2,2-Bis(3-sec-butyl-4-hydroxyphenyl)propane
2,2-Bis(3-t-butyl-4-hydroxyphenyl)propane
2,2-Bis(3-cyclohexyl-4-hydroxyphenyl)propane
2,2-Bis(3-allyl-4-hydroxyphenyl)propane
2,2-Bis(3-methoxy-4-hydroxyphenyl)propane
2,2-Bis(3,5-dimethyl-4-hydroxyphenyl)propane
2,2-Bis(2,3,5,6-tetramethyl-4-hydroxyphenyl)propane
2,2-Bis(3-5-dichloro-4-hydroxyphenyl)propane
2,2-Bis(3,5-dibromo-4-hydroxyphenyl)propane
2,2-Bis(2,6-dibromo-3,5-dimethyl-4-hydroxyphenyl)propane
α,α-Bis(4-hydroxyphenyl)toluene
α,α,α',α'-Tetramethyl-α,α'-bis(4-hydroxyphenyl)-p-xylene
2,2-Bis(4-hydroxyphenyl)hexafluoropropane
1,1-Dichloro-2,2-bis(4-hydroxyphenyl)ethylene
1,1-Dibromo-2,2-bis(4-hydroxyphenyl)ethylene
1,1-Dichloro-2,2-bis(5-phenoxy-4-hydroxyphenyl)ethylene
4,4'-Dihydroxybenzophenone
3,3-Bis(4-hydroxyphenyl)-2-butanone
1,6-Bis(4-hydroxyphenyl)-1,6-hexanedione
Bis(4-hydroxyphenyl) ether
Bis(4-hydroxyphenyl) sulfide
Bis(4-hydroxyphenyl) sulfoxide
Bis(4-hydroxyphenyl) sulfone
Bis(3,5-dimethyl-4-hydroxyphenyl) sulfone
9,9-Bis(4-hydroxyphenyl)fluorene
2,7-Dihydroxypyrene
6,6'-Dihydroxy-3,3,3',3'-tetramethylspiro(bis)indane ("spirobiindane bisphenol")
3,3-Bis(4-hydroxyphenyl)phthalide.

Bisphenol A is ordinarily preferred by reason of its availablity and particular suitability.

Component B-2 is most often a bisphenol A isophthalate, terephthalate or mixed isophthalate-terephthalate. It generally has an intrinsic viscosity in the range of 0.5-1.0 dl./g., as determined under the conditions described hereinabove with reference to poly(alkylene dicarboxylates).

As previously mentioned, the proportions of the individual polyesters in component B are 40-95% of component B-1 and 5-60% of component B-2.

Polyesters tend to undergo hydrolytic degradation at the high extrusion and molding temperatures encountered by the compositions of this invention. Therefore, it is preferred that the polyester used as component B be substantially free of water.

According to the present invention, the tendency of blends of components A and B to be incompatible is overcome by incorporating in the composition (C) at least one aromatic polycarbonate, preferably a homopolycarbonate. The structural units in such homopolycarbonate generally have the formula

$$\text{(VIII)} \qquad -O-A^4-O-\overset{\displaystyle O}{\overset{\|}{C}}- \quad ,$$

wherein $A^4$ is an aromatic radical. Suitable $A^4$ values include m-phenylene, p-phenylene, 4,4'-biphenylene, 2,2-bis(4-phenylene)propane, 2,2-bis(3,5-dimethyl-4-phenylene)propane and similar radicals such as those which correspond to the dihydroxyaromatic compounds disclosed by name or formula (generic or specific) in U.S. Patent 4,217,438. Also included are radicals containing non-hydrocarbon moieties. These may be substituents such as chloro, nitro, alkoxy and the like, and also linking radicals such as thio, sulfoxy, sulfone, ester, amide, ether and carbonyl. Most often, however, all $A^4$ radicals are hydrocarbon radicals.

The $A^4$ radicals preferably have the formula

(IX) $-A^5-Y-A^6-$,

wherein each of $A^5$ and $A^6$ is a monocyclic divalent aromatic radical and Y is as previously defined. The free valence bonds in formula IX are usually in the meta or para positions of $A^5$ and $A^6$ in relation to Y. Such $A^4$ values may be considered as being derived from bisphenols such as those previously described, especially bisphenol A.

Any known method of preparing homopolycarbonates may be used for preparing component C. Included are interfacial and other methods in which phosgene is reacted with bisphenols, transesterification methods in which bisphenols are reacted with diaryl carbonates, and methods involving conversion of cyclic polycarbonate oligomers to linear polycarbonates. The latter method is disclosed in U.S. Patent 4,644,053.

For the purposes of this invention, polycarbonates having a weight average molecular weight of at least about 45,000 (as determined by gel permeation chromatography relative to polystyrene) are employed. A molecular weight of at least about 55,000 is preferred, and one of at least about 70,000 is especially preferred.

Because high impact strength is frequently an important property of the compositions of this invention, it is often preferred to incorporate therein (D) at least one elastomeric polyphenylene ether-compatible impact modifier. Suitable impact modifiers include various elastomeric copolymers, of which examples are ethylene-propylene-diene polymers (EPDM's), both unfunctionalized and functionalized with (for example) sulfonate or phosphonate groups; carboxylated ethylene-propylene rubbers; block copolymers of alkenylaromatic compounds such as styrene with polymerizable olefins or dienes, including butadiene, isoprene, chloroprene, ethylene, propylene and butylene; and core-shell elastomers containing, for example, a poly(alkyl acrylate) core attached to a polystyrene shell via an interpenetrating network. Such core-shell elastomers are more fully disclosed in U.S. Patent 4,681,915.

The preferred impact modifiers are block (typically diblock, triblock or radial teleblock) copolymers of alkenylaromatic compounds and dienes. Most often, at least one block is derived from styrene and at least one other block from at least one of butadiene and isoprene. Especially preferred are the triblock copolymers with polystyrene end blocks and diene-derived midblocks. It is frequently advantageous to remove (preferably) or decrease the aliphatic unsaturation therein by selective hydrogenation. The weight average molecular weights of the impact modifiers are typically in the range of 50,000-300,000. Block copolymers of this type are commercially available from Shell Chemical Company under the trademark KRATON, and include KRATON D1101, G1650, G1651, G1652, G1657 and G1702.

Components A and B are present in the amounts of 25-60% and 30-60%, respectively, of total resinous components. Most often, component A comprises 25-30% and component B 45-60%. When high impact strength is desired, the weight ratio of component A to component B should be at most 1.2:1. Component D, the elastomeric impact modifier, is employed when present in the amount of 5-25% and especially 10-20%.

The chemical role of the inactivated polyphenylene ether in the compositions of this invention is not fully understood, and any reliance on chemical theory as a basis for the invention is specifically disclaimed. It is believed, however, that the presence of more than a certain minimum proportion of amino compounds in the polyphenylene ether can cause degradation in the molecular weight of the polycarbonate and/or polyester. If this is true, the removal or neutralization of the greater part of such amino compounds produces an environment in which high molecular weight is maintained in the polycarbonate (thus maximizing its effect as a compatibilizing agent) and polyester.

It is within the scope of the invention for the composition to contain other conventional ingredients such as fillers, flame retardants, pigments, dyes, stabilizers, anti-static agents, mold release agents and the like. The presence of other resinous components is also contemplated. These include impact modifiers compatible with component B, such as various graft and core-shell copolymers of such monomers as butadiene, styrene, butyl acrylate and methyl methacrylate. It is frequently preferred to preextrude such impact modifiers with component B prior to its utilization in the invention. By this method, compositions having improved ductility at low temperatures may be prepared.

Also included as other resinous components are other impact and processability modifiers for component A, such as olefin copolymers. In general, the amounts of any other resinous components, if present, will not exceed 15% by weight of total resin.

The preparation of the compositions of this invention is normally achieved by merely blending the ingredients thereof under conditions adapted for the formation of an intimate blend. Such conditions often include extrusion, which may be conveniently effected in a screwtype or similar extruder which applies a substantial shearing force to the composition, thereby decreasing the particle size thereof. The extrusion temperature is generally in the range of 100-325 °C.

In one embodiment of the invention, a single extruder is employed which has at least two ports for introduction of ingredients, one such port being downstream from the other. Component A or any reactants

for preparation thereof and at least a portion of component D (when employed) are introduced through the first port and extruded, preferably at a temperature in the range of 300-350 °C. This portion of the extruder is preferably vacuum vented.

The remaining ingredients are introduced through the downstream port and extrusion is continued, preferably at a lower temperature to minimize degradation of components B, C and D. For further minimization of degradation, it may be advantageous to introduce a portion of component D at this point. Typical extrusion temperatures at this stage are in the range of 260-320 °C.

The invention is illustrated by the following examples. Percentages are by weight and are based on total resinous constituents. Impact and tensile values were determined in British units and have been converted to metric units. Heat distortion temperatures were determined at 0.455 MPa. unless otherwise indicated.

Examples 1-6

A series of compositions according to the invention was prepared from the following:

Component A - a poly(2,6-dimethyl-1,4-phenylene ether) having a number average molecular weight of about 20,000 and an intrinsic viscosity in chloroform at 25 °C of 0.46 dl./g., which has been extruded on a twin screw extruder within the temperature range of about 300-315 °C, with vacuum venting to a maximum pressure 2.67 mPa (20 torr); it contained 438 ppm. nitrogen.

Component B:

PBT - a poly(butylene terephthalate) having a number average molecular weight of about 50,000, as determined by gel permeation chromatography. Polyarylate - a commercially available bisphenol A isophthalate-terephthalate in which the acid moieties are present in equimolar amounts, having an intrinsic viscosity of 0.71 dl./g.

Component C - a bisphenol A homopolycarbonate prepared interfacially and having a weight average molecular weight of about 192,000.

Component D - a commercially available triblock copolymer with polystyrene end blocks having weight average molecular weights of 29,000 and a hydrogenated butadiene midblock having a weight average molecular weight of 116,000.

The ingredients were tumble mixed in a jar mill for 1/2 hour and extruded at 120-260 °C on a twin screw extruder with a screw speed of 400 rpm. The extrudate was quenched in water and pelletized. The pellets were then injection molded into test bars which were evaluated for notched Izod impact strength (ASTM procedure D256), heat distortion temperature (ASTM procedure D648) and tensile properties (ASTM procedure D638). The relevant parameters and test results are given in the following table.

| | Example 1 | 2 | 3 | 4 | 5 | 6 |
|---|---|---|---|---|---|---|
| Component A, % | 30 | 30 | 30 | 35 | 40 | 34.7 |
| Component B, %: | | | | | | |
| PBT | 23 | 28 | 41 | 21 | 18 | 26.7 |
| Polyarylate | 23 | 18 | 5 | 20 | 18 | 26.7 |
| Component C, % | 10 | 10 | 10 | 10 | 10 | 12 |
| Component D, % | 14 | 14 | 14 | 14 | 14 | -- |
| Izod impact strength, joules/m. | 764 | -- | -- | 64 | 203 | 32 |
| Tensile strength, MPa.: | | | | | | |
| At break | 49.4 | 45.0 | 39.6 | -- | -- | 59.6 |
| At yield | 49.1 | 44.5 | 41.4 | -- | -- | 64.7 |
| Tensile elongation, % | 121 | 121 | 143 | -- | -- | 110 |
| Heat distortion temp., °C | 100 | -- | 135 | 118 | 126 | 94 |

Example 7

Test bars of the composition of Example 1 were immersed in gasoline for three days under stress. At the end of this time, the Izod impact strength was 459 joules/m.

## Claims

**1.** A resinous composition comprising the following resinous components and any reaction products thereof, all percentage proportions being by weight of total resinous components:

(A) 25-60% of at least one polyphenylene ether containing at most 800 ppm. of unneutralized amino nitrogen;

(B) 30-60% of a polyester mixture comprising (B-1) 40-95%, based on total polyester, of a polymer consisting essentially of structural units of the formula

$$\text{(I)} \qquad -O-R^1-O-\overset{O}{\overset{\|}{C}}-A^1-\overset{O}{\overset{\|}{C}}- \quad ,$$

and (B-2) 5-60% of a polymer consisting essentially of structural units of the formula

(II) 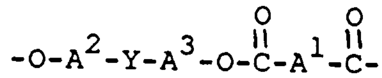 ,

wherein:

$R^1$ is a saturated $C_{2-10}$ divalent aliphatic or alicyclic hydrocarbon radical;

each of $A^1$, $A^2$ and $A^3$ is independently a monocyclic divalent aromatic radical; and

Y is a bridging radical in which one or two atoms separate $A^2$ from $A^3$; and

(C) 5-20% of at least one aromatic polycarbonate having a weight average molecular weight of at least 45,000 as determined by gel permeation chromatography relative to polystyrene.

**2.** A composition according to claim 1 wherein component A comprises a plurality of structural units having the formula

(III) 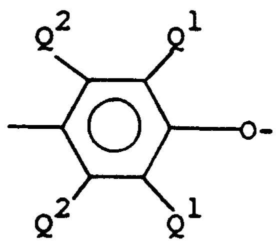 ,

and in each of said units independently, each $Q^1$ is independently halogen, primary or secondary lower alkyl, phenyl, haloalkyl, aminoalkyl, hydrocarbonoxy, or halohydrocarbonoxy wherein at least two carbon atoms separate the halogen and oxygen atoms; and each $Q^2$ is independently hydrogen, halogen, primary or secondary lower alkyl, phenyl, haloalkyl, hydrocarbonoxy or halohydrocarbonoxy as defined for $Q^1$.

**3.** A composition according to claim 2 wherein component A is a poly(2,6-dimethyl-1,4-phenylene ether).

**4.** A composition according to claim 3 wherein the weight ratio of component A to component B is at most 1.2:1.

**5.** A composition according to claim 4 wherein component B-1 is poly(ethylene terephthalate) or poly-(butylene terephthalate).

**6.** A composition according to claim 5 wherein component B-2 is a bisphenol A isophthalate, terephthalate or mixed isophthalate-terephthalate.

**7.** A composition according to claim 6 wherein component C is a bisphenol A polycarbonate.

**8.** A composition according to claim 7 wherein component C has a molecular weight of at least 70,000.

**9.** A composition according to claim 8 wherein component B-1 is a poly(butylene terephthalate) having a number average molecular weight in the range of 20,000-70,000.

**10.** A composition according to claim 9 wherein component B-2 has an intrinsic viscosity in the range of 0.5-1.0 dl./g., as determined at 30 °C in a mixture of 60% phenol and 40% 1,1,2,2-tetrachloroethane by weight.

**11.** A composition according to claim 5 which also contains (D) 5-25% of at least one elastomeric polyphenylene ether-compatible impact modifier.

**12.** A composition according to claim 11 wherein component D is a block copolymer of at least one alkenylaromatic compound and at least one diene.

**13.** A composition according to claim 12 wherein component D is a triblock copolymer wherein the end blocks are derived from styrene and the midblock is derived from at least one of isoprene and butadiene.

**14.** A composition according to claim 13 which contains 25-30% of component A and 45-60% of component B.

**15.** A composition according to claim 14 wherein component B-2 is a bisphenol A isophthalate, terephthalate or mixed isophthalate-terephthalate.

**16.** A composition according to claim 15 wherein component C is a bisphenol A polycarbonate.

**17.** A composition according to claim 16 wherein component C has a molecular weight of at least 70,000.

**18.** A composition according to claim 17 wherein component B-1 is a poly(butylene terephthalate) having a number average molecular weight in the range of 20,000-70,000.

**19.** A composition according to claim 18 wherein component B-2 has an intrinsic viscosity in the range of 0.5-1.0 dl./g., as determined at 30 °C in a mixture of 60% phenol and 40% 1,1,2,2-tetrachloroethane by weight.

**20.** A composition according to claim 19 wherein the aliphatic unsaturation in the midblock of component D has been removed by selective hydrogenation.

**Patentansprüche**

**1.** Harzartige Zusammensetzung enthaltend die folgenden harzartigen Komponenten und Reaktionsprodukte derselben, wobei alle Prozentsätze auf das Gewicht der gesamten harzartigen Zusammensetzung bezogen sind:

(A) 25-60 % von wenigstens einem Polyphenylenäther, der höchstens 800 ppm nichtneutralisierten Aminstickstoff enthält;

(B) 30- 60 % einer Polyestermischung enthaltend (B-1) 40-95 %, bezogen auf den gesamten Polyester,eines Polymeren bestehend im wesentlichen aus Struktureinheiten der Formel

$$(I) \qquad -O-R^1-O-\overset{\overset{\displaystyle O}{\|}}{C}-A^1-\overset{\overset{\displaystyle O}{\|}}{C}-$$

und (B-2) 5-60 % eines Polymeren bestehend im wesentlichen aus Struktureinheiten der Formel

$$(II) \qquad -O-A^2-Y-A^3-O-\overset{\overset{\displaystyle O}{\|}}{C}-A^1-\overset{\overset{\displaystyle O}{\|}}{C}-$$

worin

$R^1$ ein gesättigter $C_2$-10 zweiwertiger aliphatischer oder alizyklischer Kohlenwasserstoffrest ist;

jedes $A^1$, $A^2$ und $A^3$ unabhängig ein monozyklischer zweiwertiger aromatischer Rest ist; und

Y einen Brückenrest darstellt, in welchem ein oder zwei Atome $A^2$ von $A^3$ trennen; und

(c) 5-20 % wenigstens eines aromatischen Polycarbonats mit einem gewichtsgemittelten Molekulargewicht von wenigstens 45.000, bestimmt durch Gelpermeationschromatographie relativ zu Polystyrol.

2. Zusammensetzung nach Anspruch 1, worin die Komponente A eine Mehrzahl von Struktureinheiten mit der Formel

(III) 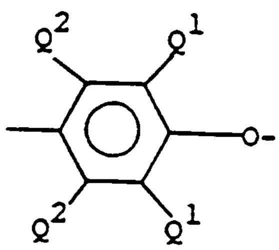

aufweist, wobei in jeder der besagten Einheiten unabhändig jedes $Q^1$ unabhängig Halogen, primäres oder sekundäres niederes Alkyl, Phenyl, Halogenalkyl, Aminoalkyl, Hydrocarbonoxy oder Halogenhydrocarbonoxy ist, worin wenigstens zwei Kohlenstoffatome das Halogen und die Sauerstoffatome trennen und jedes $Q^2$ unabhängig Wasserstoff, Halogen, primäres oder sekundäres niederes Alkyl, Phenyl, Halogenalkyl, Hydrocarbonoxy oder Halogenhydrocarbonoxy, wie es für $Q^1$ definiert ist, sind.

3. Zusammensetzung nach Anspruch 2, worin die Komponente A ein Poly(2,6-dimethyl-1,4-phenylenäther) ist.

4. Zusammensetzung nach Anspruch 3, worin das Gewichtsverhältnis der Komponente A zur Komponente B höchstens 1,2 zu 1 ist.

5. Zusammensetzung nach Anspruch 4, worin die Komponente B-1 Poly(ethylen-terephthalat) oder Poly-(butylenterephthalat) ist.

6. Zusammensetzung nach Anspruch 5, worin die Komponente B-2 ein Bisphenol-A Isophtalat, Terephthalat oder gemischtes Isophthalat-Terephthalat ist.

7. Zusammensetzung nach Anspruch 6, worin die Komponente C ein Bisphenol-A Polycarbonat ist.

8. Zusammensetzung nach Anspruch 7, worin die Komponente C ein Molekulargewicht von wenigstens 70.000 aufweist.

9. Zusammensetzung nach Anspruch 8, worin die Komponente B-1 ein Poly(butylen-terephthalat) mit einem zahlengemittelten Molekulargewicht im Bereich von 20.000-70.000 aufweist.

10. Zusammensetzung nach Anspruch 9, worin die Komponente B-2 eine grundmolare Viskosität im Bereich von 0,5-1,0 dl/g,bestimmt bei 30 °C in einer Mischung aus 60 Gew.-% Phenol und 40 Gew.-% 1,1,2,2-Tetrachlorethan aufweist.

11. Zusammensetzung nach Anspruch 5, die ebenfalls enthält: (D) 5-25 % von wenigstens einem elastomeren Polyphenylenäther-verträglichen Schlagmodifizierungsmittel.

12. Zusammensetzung nach Anspruch 11, worin die Komponente D ein Blockcopolymer aus wenigstens einer alkenylaromatischen Verbindung und wenigstens einem Dien ist.

13. Zusammensetzung nach Anspruch 12, worin die Komponente D ein Triblock-Copolymer ist, worin die Endblöcke abgeleitet sind von Styrol und der Mittelblock abgeleitet ist aus wenigstens einem aus Isopren und Butadien.

14. Zusammensetzung nach Anspruch 13, die 25-30 % einer Komponente A und 45-60 % einer Komponente B enthält.

15. Zusammensetzung nach Anspruch 14, worin die Komponente B-2 ein Bisphenol-A Isophthalat, Terephthalat oder gemischtes Isophthalat-Terephthalat ist.

**16.** Zusammensetzung nach Anspruch 15, worin die Komponente C ein Bisphenol-A Polycarbonat ist.

**17.** Zusammensetzung nach Anspruch 16, worin die Komponente C ein Molekulargewicht von wenigstens 70.000 aufweist.

**18.** Zusammensetzung nach Anspruch 17, worin die Komponente B-1 ein Poly(butylen-terephthalat) mit einem zahlengemittelten Molekulargewicht im Bereich von 20.000-70.000 aufweist.

**19.** Zusammensetzung nach Anspruch 18, worin die Komponente B-2 eine grundmolare Viskosität im Bereich von 0,5-1,0 dl/g, bestimmt bei 30 °C in einer Mischung aus 60 Gew.-% Phenol und 40 Gew.-% 1,1,2,2-Tetrachlorethan aufweist.

**20.** Zusammensetzung nach Anspruch 19, worin die aliphatische Ungesättigtheit in dem Mittelblock der Komponente D durch selktive Hydrierung entfernt worden ist.

## Revendications

**1.** Composition de résine comprenant les composants résineux suivants et n'importe lesquels des produits de réaction de ceux-ci, tous les pourcentages étant donnés en poids par rapport à la somme des composants résineux :

- (A) de 25 à 60% d'au moins un poly(phénylène éther)contenant au plus 800 ppm d'azote sous forme de groupe amino non neutralisé,
- (B) de 30 à 60 % d'un mélange de polyester comprenant
  - (B-1) de 40 à 95 %, par rapport au polyester total, d'un polymère constitué essentiellement de motifs structuraux de formule

$$(I)\qquad -O-R^1-O-\overset{\overset{O}{\|}}{C}-A^1-\overset{\overset{O}{\|}}{C}-$$

  et
  - (B-2) de 5 à 60 % d'un polymère constitué essentiellement de motifs structuraux de formule

$$(II)\qquad -O-A^2-Y-A^3-O-\overset{\overset{O}{\|}}{C}-A^1-\overset{\overset{O}{\|}}{C}-$$

  dans lesquelles

  | | |
  |---|---|
  | $R^1$ | représente un radical hydrocarboné divalent aliphatique ou alicyclique saturé comportant de 2 à 10 atomes de carbone, |
  | $A^1$, $A^2$ et $A^3$ | représentent chacun indépendamment un radical aromatique divalent monocyclique, et |
  | Y | représente un radical pontant dans lequel un ou deux atomes sépare(nt) $A^2$ de $A^3$, et |

  - (C) de 5 à 20 % d'au moins un polycarbonate aromatique ayant une masse moléculaire moyenne enpoids au moins égale à 45 000, mesurée par chromatographie par perméation de gel avec étalonnage par le polystyrène.

**2.** Composition conforme à la revendication 1 dans laquelle le composant A contient plusieurs motifs structuraux de formule

(III) 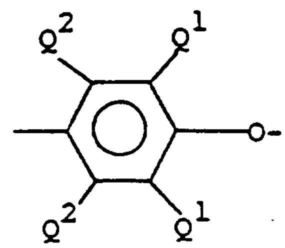

et dans chacune desdits motifs, chaque $Q^1$ représente indépendamment un atome d'halogène, un groupe alkyle inférieur primaire ou secondaire, phényle, halogénoalkyle, aminoalkyle, hydrogénocarbonoxy ou halogénohydrogénocarbonoxy, dans lequel au moins deux atomes de carbone séparent l'atome d'halogène et l'atome d'oxygène, et chaque $Q^2$ représente indépendamment un atome d'hydrogène, d'halogène, un groupe alkyle inférieur primaire ou secondaire, phényle, halogénoalkyle, hydrogénocarbonoxy ou halogénohydrogénocarbonoxy défini pour $Q^1$.

3. Composition conforme à la revendication 2 dans laquelle le composant A est un poly(2,6-diméthyl-1,4-phénylène éther).

4. Composition conforme à la revendication 3 dans laquelle le rapport en poids du composant A au composant B est au plus égal à 1,2/1.

5. Composition conforme à la revendication 4 dans laquelle le composant B-1 est un poly(téréphtalate d'éthylène) ou un poly(téréphtalate de butylène).

6. Composition conforme à la revendication 5 dans laquelle le composant B-2 est un isophtalate de bisphénol A, un téréphtalate de bisphénol A ou un mélange d'isophtalate et de téréphtalate de bisphénol A.

7. Composition conforme à la revendication 6 dans laquelle le composant C est un polycarbonate de bisphénol A.

8. Composition conforme à la revendication 7 dans laquelle le composant C a une masse moléculaire au moins égale à 70 000.

9. Composition conforme à la revendication 8 dans laquelle le composant B-1 est un poly(téréphtalate de butylène) ayant une masse moléculaire moyenne en nombre comprise entre 20 000 et 70 000.

10. Composition conforme à la revendication 9 dans laquelle le composant B-2 a une viscosité intrinsèque comprise entre 0,5 et 1,0 dl/g, mesurée à 30 °C dans un mélange de 60 % en poids de phénol et de 40 % en poids de 1,1,2,2-tétrachloroéthane.

11. Composition conforme à la revendication 5 contenant également (D) de 5 à 25 % d'au moins un agent élastomère modifiant la résistance aux chocs compatible avec le poly(phénylène éther).

12. Composition conforme à la revendication 11 dans laquelle le composant D est un copolymère séquencé d'au moins un composé alcénylaromatique et d'au moins un diène.

13. Composition conforme à la revendication 12 dans laquelle le composant D est un copolymère triséquencé dans lequel les séquences terminales sont dérivées du styrène et la séquence médiane est dérivée de l'isoprène et/ou du butadiène.

14. Composition conforme à la revendication 13 contenant de 25 à 30 % du composant A et de 45 à 60 % du composant B.

15. Composition conforme à la revendication 14 dans laquelle le composant B-2 est un isophtalate de bisphénol A, un téréphtalate de bisphénol A ou un mélange d'isophtalate et de téréphtalate de

bisphénol A.

**16.** Composition conforme à la revendication 15 dans laquelle le composant C est un polycarbonate de bisphénol A.

**17.** Composition conforme à la revendication 16 dans laquelle le composant C a une masse moléculaire au moins égale à 70 000.

**18.** Composition conforme à la revendication 17 dans laquelle le composant B- 1 est un poly(téréphtalate de butylène) ayant une masse moléculaire moyenne en nombre comprise entre 20 000 et 70 000.

**19.** Composition conforme à la revendication 18 dans laquelle le composant B-2 a une viscosité intrinsèque comprise entre 0,5 et 1,0 dl/g, mesurée à 30 °C dans un mélange de 60% en poids de phénol et de 40 % en poids de 1,1,2,2-tétrachloroéthane.

**20.** Composition conforme à la revendication 19 dans laquelle l'insaturation aliphatique dans la séquence médiane du composant D a été éliminée par hydrogénation sélective.